(19) Europäisches Patentamt
European Patent Office
Office européen des brevets

(11) Numéro de publication: **0 221 586**
**B1**

(12) **FASCICULE DE BREVET EUROPEEN**

(45) Date de publication du fascicule du brevet: **11.04.90**

(51) Int. Cl.[5]: **C 08 G 65/26,** C 08 G 18/67, C 08 G 65/32

(21) Numéro de dépôt: **86201696.1**

(22) Date de dépôt: **02.10.86**

(54) **Polyétherpolyols bromés, procédé pour leur obtention et utilisation des polyétherpolyols bromés dans la fabrication de mousses rigides de polyuréthane.**

(30) Priorité: **10.10.85 FR 8515166**

(43) Date de publication de la demande:
**13.05.87 Bulletin 87/20**

(45) Mention de la délivrance du brevet:
**11.04.90 Bulletin 90/15**

(84) Etats contractants désignés:
**AT BE CH DE ES FR GB GR IT LI LU NL SE**

(56) Documents cités:
**FR-A-1 502 050**
**US-A-3 936 425**
**US-A-4 002 689**

**PATENTS ABSTRACTS OF JAPAN, page 3524 C 78; & JP-A-53 115 797 (MITSUI TOATSU KAGAKU K.K.) 10.09.1978**

(73) Titulaire: **SOLVAY & Cie (Société Anonyme)**
**Rue du Prince Albert, 33**
**B-1050 Bruxelles (BE)**

(72) Inventeur: **Collin, André**
**Rue du Pont-Piraux, 3A**
**B-6338 Ligny (BE)**

(74) Mandataire: **Marckx, Frieda et al**
**Solvay & Cie Département de la propriété industrielle 310, rue de Ransbeek**
**B-1120 Bruxelles (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 221 586 B1

**Description**

La présente invention concerne de nouveaux polyétherpolyols bromés, un procédé pour leur obtention et l'utilisation des polyétherpolyols bromés dans la fabrication de mousses rigides de polyuréthane.

Les mousses rigides de polyuréthane trouvent des applications multiples et diverses dans l'industrie et, notamment, dans les secteurs de la construction, de l'isolation et de l'ameublement où la résistance au feu constitue une propriété indispensable.

Il existe plusieurs moyens pour impartir des propriétés de résistance au feu aux mousses de polyuréthane. Un procédé bien connu consiste à incorporer aux mousses des additifs ignifuges comme l'oxyde d'antimoine ou encore des composés halogénés et/ou phosporés tels que les phosphates de tris(dibrompropyle) ou de tris(dichloropropyle), les biphényles chlorés et les hydrocarbures halogénés. Ces additifs non liés chimiquement au polymère de base sont incapables d'assurer une résistance au feu permanente uniformément répartie. Par ailleurs, ils ont en règle générale un effet plastifiant sur la mousse, et par voie conséquence, déprécient ses propriétés mécaniques, notamment sa résistance à la compression et sa stabilité dimensionnelle.

Un autre moyen connu consiste à mettre en oeuvre des polyétherpolyols halogénés qui assurent la permanence de la résistance au feu de mousses de polyuréthane résultantes.

Dans la demande de brevet japonais JA—A—53—115797 du 22 février 1977 (MITSUI TOATSU KAGAKU K.K.) et dans le brevet français FR—A—1502050 du 5 octobre 1966 (PECHINEY-SAINT-GOBAIN), on décrit des polyétherdiols dibromés comprenant dans leur molécule un radical 1,4-dioxy-2,3-dibromo-2-butènylénique. Ces polyétherdiols bromés conviennent à la fabrication de mousses de polyuréthane présentant un résistance au feu permanente. Toute fois, vu leur fonctionnalité faible, égale à deux, les mousses rigides qui en résultent présentent des propriétiés mécaniques médiocres. Dans le brevet français précité, on prévoit également la possibilité de mettre en oeuvre des mélanges desdits polyétherdiols dibromés avec des polyétherpolyols non halogénés de fonctionnalité supérieure à 2, ce qui a pour effet d'augmenter la fonctionnalité moyenne du mélange et donc les propriétés mécaniques des mousses rigides de polyuréthane qui en résultant. Néanmoins, cette amélioration des propriétés mécaniques s'obtient au détriment de la teneur en brome et donc de la résistance au feu des mousses de polyuréthane rigides.

Dans le brevet français FR—A—1350425 du 12 mars 1963 (OLIN MATHIESON), on décrit l'emploi pour la fabrication de mousses de polyuréthane de polyétherpolyols chlorés ou bromés qui sont des polyépichlorhydrines fabriquées par addition d'épichlorhydrine ou d'épibromhydrine sur des alcools polyhydriques monomères non halogénés contenant au moins deux groupements hydroxyles. Ces polyétherpolyols halogénés, caractérisés notamment par des groupements halogénohydriques terminaux, sont instables au stockage en présence des composés aminés couramment utilisés dans la formulation de prémélanges pour mousses de polyuréthane. De plus, les mousses de polyuréthanes qui en résultent par réaction avec des polyisocyanates organiques présentent une stabilité dimensionnelle médiocre.

Dans le brevet belge BE—A—798674 du 25 avril 1973 (SOLVAY & Cie), on décrit de polyétherpolyols chlorobromés également dérivés d'épichlorhydrine qui sont caractérisé notamment par la présence de groupements alpha-diols terminaux. Les polyuréthanes cellulaires fabriqués à l'intervention des dits polyétherpolyols halogénés présentent, outre une bonne résistance au feu, d'excellentes propriétés mécaniques et notamment une bonne stabilité dimensionnelle. La viscosité relativement élevée de ces polyétherpolyols complique néanmoins quelque peu leur mise en oeuvre. En outre, quoique les prémélanges de ces polyétherpolyols avec des catalyseurs aminés soient plus stables que ceux à base de polyépihalohydrines, leur stabilité au stockage n'est pas optimale.

La présente invention, telle qu'elle est caractérisée dans les revendications a pour but de procurer une classe de nouveaux polyétherpolyols bromés qui ne présentent pas les inconvénients précités.

Les polyétherpolyols bromés selon l'invention répondent à la formule générale:

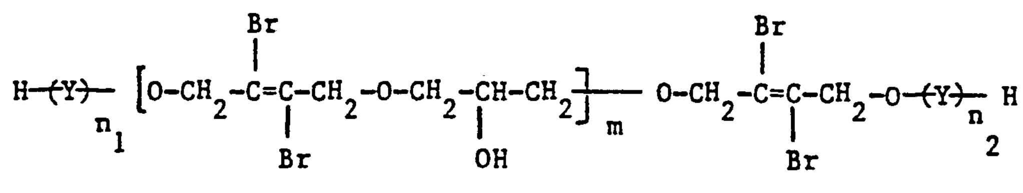

(I)

dans laquelle:

Y représente des radicaux oxyalkyléniques dérivés des oxydes d'éthylène, de propylène et/ou de butylène

m représente un nombre tel que $1 \leqslant m \leqslant 2$ et

$n_1$ et $n_2$ représentent des nombres tels que $1 \leqslant (n_1 + n_2) \leqslant 5$.

Les polyétherpolyols bromés selon l'invention comprennent donc comme halogène exclusivement du brome vinylique particulièrement stable chimiquement vis-à-vis des catalyseurs aminés.

Les polyétherpolyols bromés selon l'invention résultent de réactions successives de condensation et d'addition et sont constitués de mélanges de polyétherpolyols bromés.

C'est pourquoi la formule générale (I) doit être établie statistiquement. Dans cette formule les paramètres m, $n_1$ et $n_2$ représentent des valeurs moyennes. De même, les radicaux oxyalkyléniques $(Y)_{n1}$ et $(Y)_{n2}$ répondent indifféremment aux formules

$$-\!\!\left(O-\underset{R_1}{\underset{|}{CH}}-\underset{R_2}{\underset{|}{CH}}\right)_{n_1} \quad \text{ou} \quad -\!\!\left(O-\underset{R_2}{\underset{|}{CH}}-\underset{R_1}{\underset{|}{CH}}\right)_{n_1} \quad \text{et}$$

$$-\!\!\left(\underset{R_1}{\underset{|}{CH}}-\underset{R_2}{\underset{|}{CH}}-O\right)_{n_2} \quad \text{ou} \quad -\!\!\left(\underset{R_2}{\underset{|}{CH}}-\underset{R_1}{\underset{|}{CH}}-O\right)_{n_2}$$

dans lesquelles les radicaux $R_1$ et $R_2$ représentant indépendamment l'un de l'autre et en fonction de l'oxyde d'alkène utilisé de l'hydrogène, un groupement méthyle ou un groupement éthyle.

Des polyétherpolyols bromés préféres selon l'invention répondent à la formule générale (I) ci-dessus dans laquelle:

m représente un nombre tel que $1 \leq m \leq 2$ et

$n_1$ et $n_2$ représentent des nombres tels que $1 \leq (n_1 + n_2) \leq 3$.

On donne par ailleurs la préférence aux polyétherpolyols bromés de formule générale (I) dans laquelle Y représente des radicaux oxyalkyléniques dérivés des oxydes de propylène et/ou de butylène et, plus particulièrement exclusivement de l'oxyde de propylène.

Des polyétherpolyols bromés selon l'invention particulièrement préféres sont par conséquent ceux répondant à la formule générale (I) dans laquelle:

Y représente des radicaux oxyalkyléniques dérivés de l'oxyde de propylène.

m représente un nombre tel que $1 \leq m \leq 2$ et

$n_1$ et $n_2$ représentent des nombres tels que $1 \leq (n_1 + n_2) \leq 3$.

Des polyétherpolyols bromés selon l'invention qui sont tout particulièrement préférés sont ceux répondant à la formule générale (I) dans laquelle:

Y représente des radicaux oxyalkyléniques dérivés de l'oxyde de propylène.

m représente un nombre égal à 1 et

$n_1$ et $n_2$ représentent des nombres tels que $1 \leq (n_1 + n_2)$ est égal à 1.

La présente invention vise également à procurer un procédé pour l'obtention des polyétherpolyols bromés selon l'invention. Ce procédé consiste, dans un première étape, à condenser (m + 1) moles de 2-butyne-1,4-diol avec m moles d'épichlorhydrine en présence de m moles d'une base forte pour obtenir un polyétherpolyol insaturé de formule générale:

$$HO\left[CH_2-C\equiv C-CH_2-O-CH_2-\underset{OH}{\underset{|}{CH}}-CH_2\right]_m O-CH_2-C\equiv C-CH_2OH \qquad (II),$$

dans une deuxième étape, à additionner en milieu basique sur le polyétherpolyol insaturé (II) de l'étape précédente $(n_1 + n_2)$ moles d'oxyde(s) d'alkène(s) pour obtenir un polyétherpolyol insaturé de formule générale:

$$H-(Y)_{n_1}\left[O-CH_2-C\equiv C-CH_2-O-CH_2-\underset{OH}{\underset{|}{CH}}-CH_2\right]_m O-CH_2-C\equiv C-CH_2-O(Y)_{n_2}H \qquad (III)$$

et, dans une troisième étape, à additionner sur le polyétherpolyol insaturé (III) de l'étape précédente (m + 1) moles de brome.

En pratique, les deux premières étapes s'effectuent sans inconvénient en l'absence de solvant organique à des températures modérées situées entre 50 à 80°C environ. La base servant à la fois de réactif et de catalyseur anionique dans la première étape et exclusivement de catalyseur anionique dans la deuxième étape peut être choisie indifféremment parmi les bases inorganiques fortes telles que les hydroxydes de sodium et de potassium et les bases organiques fortes telles que les alkylammoniums. Néanmoins, on donne le préférence aux bases inorganiques fortes et ne particulier à l'hydroxyde de sodium. Avantageusement, on met en oeuvre à la première étape un léger excés de base par rapport à la quantité stoéchiométrique et qui servira de catalyseur également dans la deuxiéme étape.

La troisième étape (bromation partielle des insaturations acétylèniques) s'effectue de préférence en milieu solvant à des températures situées entre 20 et 50°C environ. A titre d'exemples de solvants utilisables dans l'étape de bromation, on peut citer l'alcool méthylique, le 1,2-dichloréthane, le chloroforme, le chlorure de méthylène et leurs mélanges.

Les polyétherpolyols bromés selon l'invention sont des liquides brunâtres présentant une viscosité dynamique à 25°C généralement inférieure à 40 Pa.s. Ils présentent une fonctionnalité moyenne comprise entre 3 et 4, un indice d'hydroxyle généralement compris entre 185 et 284 et, plus particulièrement, entre 210 et 284 mg KOH/g de polyétherpolyol bromés et une teneur en brome supérieure à 40% en poids et généralement à 45% en poids. Les polyétherpolyols bromés selon l'invention sont, par ailleurs, miscibles en toutes proportions avec les polyétherpolyols classiques pour mousses rigides de polyuréthane et présentent une stabilité au stockage nettement accrue enprésence des composés aminés couramment utilisés dans la formulation de prémélanges pour mousses de polyuréthane.

Un aspect surprenant des polyétherpolyols bromés selon l'invention réside dans le fait qu'à poids moléculaire équivalent à celui des polyétherpolyols chlorobromés selon le brevet belge BE—A—798674, ils sont beaucoup plus riches enhalogènes — et donc nettement plus efficaces sur le plan de l'ignifugation — sans que leur viscosité soit supérieure, bien au contraire, à celle des polyétherpolyols chlorobromés précites.

Les nouveaux polyétherpolyols bromés selon l'invention conviennent tout particulièrement pour la fabrication de mousses rigides de polyuréthanes présentant une ignifugation permanente, ainsi qu'une bonne stabilité dimensionnelle.

La présente invention concerne également l'utilisation des polyétherpolyols bromés selon l'invention dans la fabrication de mousses rigides de polyuréthanes. Dans cette application et en fonction du niveau d'ignifugation recherché, les polyétherpolyols bromés peuvent être utilisés seuls ou en mélange avec des polyétherpolyols non halogénés classiques. A titre d'information l'utilisation des polyétherpolyols bromés selon l'invention comme seuls polyétherpolyols bromés selon l'invention comme seuls polyétherpolyols permet la fabrication de mousses de polyuréthane classées $M_1$ au test de l'épiradiateur (norme français NFP 92.501). L'utilisation de mélanges de polyétherpolyols bromés selon l'invention et de polyétherpolyols classiques non halogénes, tels que par exemple les produits d'addition d'oxydes d'alkènes et en particulier d'oxyde de propylène sur des alcools polyhydriques monomères, contenant de 20 à 50 parties en poids de polyétherpolyols bromés selon l'invention permet de fabriquer des mousses de polyuréthane passant avec succès le test $B_2$ (norme allemande DIN 4102—$B_2$).

Les conditions générales de fabrication de mousses rigides de polyuréthane ignifuges à l'intervention de polyétherpolyols bromés selon l'invention, utilisés seuls on en mélange avec des polyétherpolyols non halogénés classiques, sont celles usuellement mises en oeuvre pour la fabrication de mousses rigides de polyuréthane à base de polyétherpolyols et, par ailleurs, bien connues de l'homme du métier.

Les mousses de polyuréthane rigides obtenues à l'intervention des polyétherpolyols bromés selon l'invention sont donc fabriquées par réaction de polyétherpolyols bromés, seuls ou en mélange avec des polyétherpolyols non halogénés et de polyisocyanate organiques, en présence d'un agent de moussage et d'un ou de plusieurs catalyseurs de réaction, éventuellement d'eau et/ou de diols ou de triols à faible poids moléculaire, d'agents émulsionnants et/ou stabilisants, de matières de charge, de pigments etc.

Les formulations peuvent également contenir des quantités mineures d'additifs ignifuges non réactifs tels que, par exemple, des composés halogénés et/ou phosphorés non réactifs.

La quantité théorique de polyisocyanate (correspondant à un indice NCO = 100) est calculée de manière connue en fonction de l'indice d'hydroxyle du ou des polyétherpolyols et, le cas échéant, de l'eau et/ou des diols et triols à faible poids moléculaire présents dans la formulation. On utilise avantageusement un léger excès de polyisocyanate de manière à garantir un indice d'isocyanate de 105 à 130 ce qui améliore la résistance à la distorsion à chaud de la mousse de polyuréthane résultante.

Les exemples qui suivent illustrent l'invention sans toutefois la limiter.

Les exemples 1 et 2 illustrent l'obtention de polyétherpolyols bromés selon l'invention. Les exemples 3 à 7 illustrent l'utilisation de polyétherpolyols bromés selon l'invention pour la fabrication de mousses de polyuréthane. Dans les exemples 3 et 4, on met en oeuvre les polyétherpolyols bromés obtenus à l'exemple 1. Dans les exemples 5, 6 et 7, on met en oeuvre les polyétherpolyols bromés obtenus à l'exemple 2.

Le polyétherpolyol non halogéné utilisé dans les exemples 4, 5 et 6 est un polyétherpolyol à base d'oxyde de propylène et de sorbitol ayant un indice d'hydroxyle de 495 mg KOH/g, commercialisé par CARBOCHIMIQUE sous le nom TERCAROL RF 55.

Le polyétherpolyol non halogéné utilisé dans l'exemple 7 est un polyétherpolyol à base d'oxyde de propylène et de sucrose ayant un indice d'hydroxyle de 495 mg KOH/g, commercialisé par CARBONCHIMIQUE sous le nom de TERCAROL RF33.

Exemple 1

L'exemple 1 illustre l'obtention de polyétherpolyols bromés de formule générale (I) dans laquelle:

Y représente des radicaux oxyalkyléniques dérivés d'oxyde de propylène,

m = 1,13

$(n_1 + n_2) = 2,20$.

Dans un réacteur thermostatisé de 10 litres équipé d'un agitateur, d'un thermomètre, d'un condenseur à reflux et d'une ampoule d'introduction, on introduit successivement 1720 g (20 moles) de 2-butyne-1,4-diol et 980,5 g (10,6 moles) d'épichlorhydrine.

Le mélange est chauffé à 60°C jusqu'à obtention d'une phase liquide homogène. On introduit ensuite en 60 minutes 445 g (11,13 moles) d'hydroxyde de sodium solide en maintenant la température du milieu réactionnel à 60°C. Après mûrissage pendant une heure à 60°C, la réaction de condensation (lère étape) est terminée. On obtient un mélange hétérogène de polycondensat (produit II) (2314 g), de chlorure de sodium précipité (387 g), d'hydroxyde de sodium résiduaire (21 g) et d'eau (191 g). L'eau est éliminée par évaporation à 80°C sous pression réduite. Ensuite, on soumet le mélange réactionnel à un entraînement à l'azote chaud (80°C) et sec.

On ramène ensuite la température à 60°C et on introduit en deux heures 1199 g (20,68 moles) d'oxyde de propylène tout en maintenant la température du milieu réactionnel à 60°C. Après mûrissage pendant deux heures à 60°C, la réaction d'addition d'oxyde de propylène sur les groupements hydroxyacétyléniques du produit (II) est terminée (2ème étape).

On abaisse le température du milieu réactionnel à 30°C avant de la diluer par addition de 557 g d'alcool méthylique et de 1671 g de chlorure de méthylène. On introduit alors en quatre heures sous agitation vigoureuse 3200 g (20 moles) de brome en maintenant la température entre 30 et 35°C. Après deux heures de mûrissage à 30°C, la bromation partielle des insaturations acétyléniques (3ème étape) est terminée. Le polyétherpolyol bromé est épuré du chlorure de sodium formé lors de l'étape de condensation (lère étape) par addition de 3000 g d'eau légèrement alcaline suivie d'une décantation de deux heures à température ambiante. Le chlorure de sodium et l'alcool méthylique mis en oeuvre à la bromation sont séparés dans la phase aqueuse légère et la phase organique dense constituée essentiellement du polyétherpolyol bromé et du chlorure de méthylène est soutirée, puis soumise à une évaporation à 80°C sous pression réduite. On isole 6510 g (97% de rendement) d'une huile brûnatre présentant les caractéristiques suivantes:

| | Valeurs mesurées | Valeurs théoriques |
|---|---|---|
| Poids moléculaire | 715 | — |
| Fonctionnalité moyenne | 3,13 | |
| Teneur en brome, % | 47,6 | 46,8 |
| Indice d'hydroxyle, mg KOH/g | 245 | 240 |
| Poids spécifique, g/cm$^3$ | — | 1,7 |
| Viscosité dynamique à 25°C, Pa.s | | 22 |

Exemple 2

L'exemple 2 illustre l'obtention de polyétherpolyols bromés de formule générale (I) dans laquelle:
Y représente des radicaux oxyalkyléniques dérivés d'oxyde de propylène,
m = 1
($n_1 + n_2 = 1$.

En utilisant l'appareillage de l'exemple 1 et dans les conditions générales de l'exemple 1, on fait réagir successivement en trois étapes:

(1) 1720 g (20 moles) de 2-butyne-1,4-diol avec 925 g (10 moles) d'épichlorhydrine, en présence de 420 g (10,5 moles) d'hydroxyde de sodium.

(2) on fait réagir avec le produit de la réaction (1), 580 g (10 moles) d'oxyde de propylène,

(3) après dilution du milieu réactionnel par 760 g d'alcool méthylique et 3293 g de 1,2-dichloréthane, on fait réagir avec le produit de la réaction (2) 3200 g de brome (20 moles).

On obtient 5775 g (rendement 95%) d'une huile brûnatre présentant les caractéristiques suivantes:

| | Valeurs théoriques | Valeurs mesurées |
|---|---|---|
| Poids moléculaire | 606 | — |
| Fonctionnalité moyenne | 3 | — |
| Teneur en brome, % | 52,8 | 52 |
| Indice d'hydroxyle, mg KOH/g | 277 | 270 |
| Poids spécifique, g/cm$^3$ | — | 1,8 |
| Viscosité dynamique à 25°C, Pa.s | — | 38 |

Exemple 3

Le exemple 3 illustre l'utilisation de polyétherpolyols bromés selon l'exemple 1 dans la fabrication d'une mousse de polyuréthane ignifuge.

Dans un récipient en polyéthylene de 400 $cm^3$, on introduit: 100 g de polyétherpolyols bromés obtenus à l'exemple 1, 1 g d'eau, 0,5 g de silicone DC 193, 1,5 g de N,N-diméthylcyclohexylamine et 19 g de trichlorofluorométhane ($R_{11}$). On agite ce mélange de manière à le rendre parfaitement homogène. On ajoute ensuite 81,3 g de bis(4-phénylisocyanate) de méthylène (MDI) brut. Le mélange résultant est agité pendant 15 secondes, puis versé dans un moule et admis à cuire à température ambiante.

Les ingrédients utilisés à la fabrication de la mousse de polyuréthane sont repris au Tableau I en annexe. Les propriétés de la mousse de polyuréthane sont reprises au Tableau II en annexe.

Exemples 4 à 7

Les exemples 4 à 7 sont réalisés dans les conditions générales de l'exemple 3.

Les ingrédients utilisés à la fabrication des mousses de polyuréthane sont repris au Tableau I en annexe, les propriétés des mousses de polyuréthane sont reprises au Tableau II en annexe.

**Tableau I**

**Ingrédients utilisés à la fabrication des mousses rigides de polyuréthane, g**

| Ingrédients | Numéro de l'exemple | | | | |
|---|---|---|---|---|---|
| | 3 | 4 | 5 | 6 | 7 |
| Polyétherpolyol non halogéné TERCAROL RF 55 | - | 45 | 70 | 70 | - |
| TERCAROL RF 33 | - | - | - | - | 10 |
| Polyétherpolyols bromés selon l'exemple 1 | 100 | 55 | - | - | - |
| Polyétherpolyols bromés selon l'exemple 2 | - | - | 25,4 | 27 | 72 |
| Eau | 1 | 1 | 1 | 1 | 1 |
| Ethylèneglycol | - | - | 1,6 | - | - |
| Glycérine | - | - | - | - | 5 |
| Silicone | 0,5 | 1 | 1 | 1 | 1 |
| N,N-diméthylcyclohexylamine | 1,5 | 2 | 1,5 | 1,5 | 0,8 |
| Trichlorofluorométhane | 19 | 22 | 26 | 24 | 22 |
| Phosphate de tris(chloropropyle) | - | - | 13 | 13 | 13 |
| MDI brut | 81,3 | 111,5 | 134 | 127,3 | 102,9 |
| Indice isocyanate | 110 | 110 | 110 | 110 | 110 |

Tableau II

Propriétés des mousses rigides de polyuréthane

| Propriétés | Numéro de l'exemple | | | | |
|---|---|---|---|---|---|
| | 3 | 4 | 5 | 6 | 7 |
| Temps de crème, secondes | 26 | 25 | 22 | 23 | 19 |
| Temps de fil, secondes | 82 | 80 | 85 | 95 | 58 |
| Temps de montée, secondes | 115 | 120 | 115 | 130 | 85 |
| Temps hors-colle, secondes | 135 | 105 | 135 | 150 | 95 |
| Poids spécifique apparent, $kg/m^3$ | 32,4 | 33,7 | 33,8 | 32,9 | 32,3 |
| Stabilité dimensionnelle $\frac{\Delta L}{L}$, % selon la norme NFT 56 122 | | | | | |
| après 7 jours à 100°C, humidité ambiante | + 4,0 | + 2,0 | + 1,5 | + 1,5 | + 2,0 |
| après 7 jours à 70°C, HR 90 % | + 2,5 | + 1,5 | + 2,0 | + 1,5 | + 2,0 |
| après 7 jours à - 30°C, humidité ambiante | - 3,5 | 0 | 0 | 0 | - 0,5 |
| Test à l'épiradiateur, selon la norme NFP 92.501, | | | | | |
| classement | $M_1$ | - | - | - | M1 |
| durée d'inflammation, secondes | 1 | - | - | - | < 5 |

Tableau II/Suite

| Propriétés | Numéro de l'exemple | | | | |
|---|---|---|---|---|---|
| | 3 | 4 | 5 | 6 | 7 |
| Test DIN 4102-B2, classement | - | B2 | B2 | B2 | - |
| Procédure K, hauteur de flamme, cm | - | 12,3 | 12,5 | 13,0 | - |
| ILO (indice limite d'oxygène)(norme ASTM D2863) | 29,5 | 23 | n.d.* | n.d.* | 30,5 |

* non déterminé

**Revendications pour les Etats contractants: BE CH DE FR GB IT LI LU NL SE**

1. Polyétherpolyols bromés de formule générale

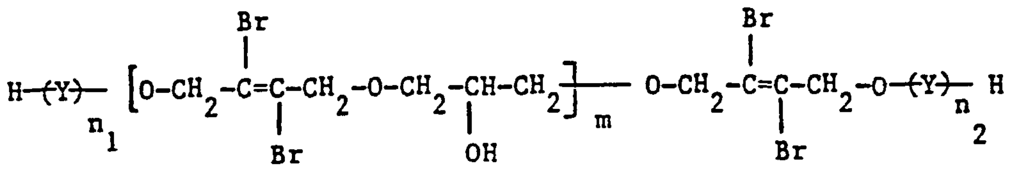

(I)

dans laquelle:

Y représente des radicaux oxyalkyléniques dérivés des oxydes d'éthylène, de propylène et/ou de butylène

m représente un nombre tel que $1 \leq m \leq 2$ et

$n_1$ et $n_2$ représentent des nombres tels que $1 \leq (n_1 + n_2 \leq 5$.

2. Polyétherpolyols bromés selon la revendication 1, caractérisés en ce que

m représente un nombre tel que $1 \leq m \leq 2$ et

$n_1$ et $n_2$ représentent des nombres tels que $1 \leq (n_1 + n_2 \leq 3$.

3. Polyétherpolyols bromés selon l'une quelconque des revendications 1 et 2, caractérisés en ce que Y représente des radicaux oxyalkyléniques dérivés de l'oxyde de propylène.

4. Polyétherpolyols bromés selon la revendication 3, caractérisés en ce que

m représente un nombre égal à 1 et

$n_1$ et $n_2$ représentent des nombres tels que $(n_1 + n_2)$ est égal à 1.

5. Procédé pour la fabrication de polyétherpolyols selon la revendication 1, caractérisé en ce que, dans une première étape, on condense (m + 1) moles de 2-butyne-1,4-diol avec m moles d'épichlohydrine en présence de m moles d'une base forte, dans une deuxième étape, on additionne en milieu basique sur le polyétherpolyol insaturé de l'étape précédente $(n_1 + n_2)$ moles d'oxyde(s) d'alkène(s) et, dans une troisième étape, on additionne sur le polyétherpolyol insaturé de l'étape précédente (m + 1) moles de brome.

6. Utilisation des polyétherpolyols bromés selon l'une quelconque des revendications 1 à 4, seuls ou en mélange avec des polyétherpolyols classiques non halogénés, pour la fabrication de mousses rigides de polyuréthane.

**Revendications pour les Etats contractants: AT GR ES**

1. Procédé pour la fabrication de polyétherpolyols bromés de formule générale

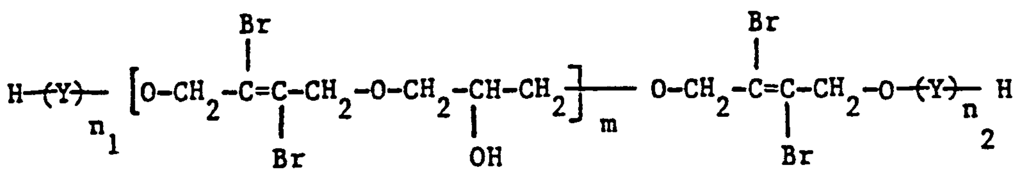

(I)

dans laquelle:

Y représente des radicaux oxyalkyléniques dérivés des oxydes d'éthylène, de propylène et/ou de butylène

m représente un nombre tel que $1 \leq m \leq 2$ et

$n_1$ et $n_2$ représentent des nombres tels que $1 \leq (n_1 + n_2 \leq 5$, caractérisé en ce que, dans une première étape, on condense (m + 1) moles de 2-butyne-1,4-diol avec m moles d'épichlohydrine en présence de m moles d'une base forte, dans une deuxième étape, on additionne en milieu basique sur le polyétherpolyol insaturé de l'étape précédente $(n_1 + n_2)$ moles d'oxyde(s) d'alkène(s) et, dans une troisième étape, on additionne sur le polyétherpolyol insaturé de l'étape précédente (m + 1) moles de brome.

2. Procédé selon la revendication 1, caractérisés en ce que

m représente un nombre tel que $1 \leq m \leq 2$ et

$n_1$ et $n_2$ représentent des nombres tels que $1 \leq (n_1 + n_2 \leq 3$.

3. Procédé selon l'une quelconque des revendications 1 et 2, caractérisé en ce que l'oxyde d'alkène est l'oxyde de propylène.

4. Procédé selon la revendication 3, caractérisé en ce que
m représente un nombre égal à 1 et
$n_1$ et $n_2$ représentent des nombres tels que $(n_1 + n_2)$ est égal à 1.

5. Utilisation des polyétherpolyols bromés obtenus selon l'une quelconque des revendications 1 à 4, seuls ou en mélange avec des polyétherpolyols classiques non halogénés, pour la fabrication de mousses rigides de polyuréthane.

**Patentansprüche für die Vertragsstaaten: BE CH DE FR GB IT LI LU NL SE**

1. Bromierte Polyetherpolyole der allgemeinen Formel:

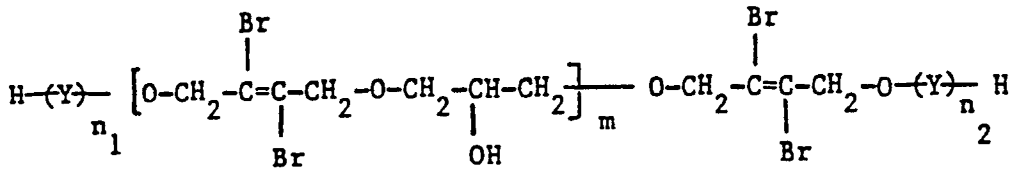 (I)

in der
Y von Ethylen-, Propylen- und/oder Butylenoxyd abgeleitete Oxyalkylen-Reste darstellt
m eine Zahl darstellt, derart daß $1 \leq m \leq 2$ und
$n_1$ und $n_2$ Zahlen darstellen, derart daß $1 \leq (n_1 + n_2) \leq 5$.

2. Bromierte Polyetherpolyole nach Anspruch 1, dadurch gekennzeichnet, daß
m eine Zahl darstellt, derart daß $1 \leq m \leq 2$ und
$n_1$ und $n_2$ Zahlen darstellen, derart daß $1 \leq (n_1 + n_2) \leq 3$.

3. Bromierte Polyetherpolyole nach einem der Ansprüche 1 und 2, dadurch gekennzeichnet, daß Y vom Propylenoxyd abgeleitete Oxyalkylenreste darstellt.

4. Bromierte Polyetherpolyole nach Anspruch 3, dadurch gekennzeichnet, daß
m eine Zahl gleich 1 und
$n_1$ und $n_2$ Zahlen darstellen, derart daß $(n_1 + n_2)$ gleich 1.

5. Verfahren zur Herstellung von Polyetherpolyolen nach Anspruch 1, dadurch gekennzeichnet, daß man in einer ersten Stufe (m + 1) Mole 2-Butyn-1,4-diol mit m Molen Epichlorhydrin in Anwesenheit von m Molen einer starken Base kondensiert, in einer zweiten Stufe in basischem Milieu dem ungesättigen Polyetherpolyol der vorhergehenden Stufe $(n_1 + n_2)$ Mole Alkenoxyd(e) zufügt und man in einer dritten Stufe dem ungesättigten Polyetherpolyol der vorhergehenden Stufe (m + 1) Mole Brom zufügt.

6. Verwendung der bromierten Polyetherpolyole nach einem der Ansprüche 1 bis 4, allein oder in Mischung mit klassischen, nicht halogenhaltigen Polyetherpolyolen zur Herstellung von Polyurethanhartschäumen.

**Patentansprüche für die Vertragsstaaten: AT ES GR**

1. Verfahren zur Herstellung von bromierten Polyetherpolyolen olen der allgemeinen Formel:

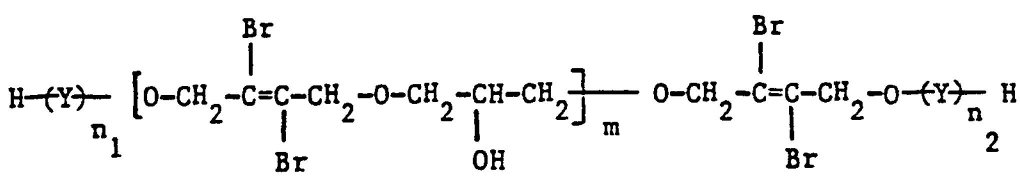 (I)

in der
Y von Ethylen-, Propylen- und/oder Butylenoxyd abgeleitete Oxyalkylen-Reste darstellt
m eine Zahl darstellt, derart daß $1 \leq m \leq 2$ und
$n_1$ und $n_2$ Zahlen darstellen, derart daß $1 \leq (n_1 + n_2) \leq 5$, dadurch gekennzeichnet, daß man in einer ersten Stufe (m + 1) Mole 2-Butyn-1,4-diol mit m Molen Epichlorhydrin in Anwesenheit von m Molen einer starken Base kondensiert, in einer zweiten Stufe in basischem Milieu dem ungesättigen Polyetherpolyol der vorhergehenden Stufe $(n_1 + n_2)$ Mole Alkenoxyd(e) zufügt und man in einer dritten Stufe dem ungesättigten Polyetherpolyol der vorhergehenden Stufe (m + 1) Mole Brom zufügt.

2. Verfahren nach Anspruch 1, dadurch gekennzeichnet, daß
m eine Zahl darstellt, derart daß $1 \leq m \leq 2$ und
$n_1$ und $n_2$ Zahlen darstellen, derart daß $1 \leq (n_1 + n_2) \leq 3$.

3. Verfahren nach einem der Ansprüche 1 und 2, dadurch gekennzeichnet, daß das Alkenoxyd Propylenoxyd ist.

4. Verfahren nach Anspruch 3, dadurch gekennzeichnet, daß
m eine Zahl gleich 1 darstellt und
$n_1$ und $n_2$ Zahlen darstellen, derart daß $(n_1 + n_2)$ gleich 1 ist.

5. Verwendung der nach einem der Ansprüche 1 bis 4 erhaltenen bromierten Polyetherpolyole, allein oder in Mischung mit klassischen, nicht halogenhaltigen Polyetherpolyolen zur Herstellung von Polyurethanhartschäumen.

**Claims for the Contracting States: BE CH DE FR GB IT LI LU NL SE**

1. Brominated polyetherpolyols of general formula

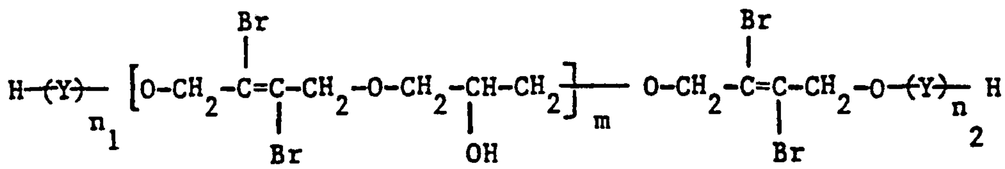

(I)

in.which:
Y denotes oxyalkylene radials derived from ethylene oxide, propylene oxide and or butylene oxide,
m denotes a number such that $1 \leqslant m \leqslant 2$, and,
$n_1$ and $n_2$ denote numbers such that $1 \leqslant (n_1 + n_2) \leqslant 5$.

2. Brominated polyetherpolyols according to Claim 1, characterized in that
m denotes a number such that $1 \leqslant m \leqslant 2$, and,
$n_1$ and $n_2$ denote numbers such that $1 \leqslant (n_1 + n_2) \leqslant 3$.

3. Brominated polyetherpolyols according to either of Claims 1 and 2, characterized in that Y denotes oxyalkylene radicals derived from propylene oxide.

4. Brominated polyetherpolyols according to Claim 3, characterized in that
m denotes a number equal to 1, and
$n_1$ and $n_2$ denote numbers such that $(n_1 + n_2)$ is equal to 1.

5. Process for the manufacture of polyetherpolyols according to Claim 1, characterized in that, in a first stage, (m + 1) moles of 2-butyne-1,4-diol are condensed with m moles of epichlorohydrin in the presence of m moles of a strong base, in a second stage, $(n_1 + n_2)$ moles of alkene oxide(s) are added in a basic medium to the unsaturated polyetherpolyol from the preceding stge, and, in a third stage, (m + 1) moles of bromine are added to the unsaturated polyetherpolyol from the preceding stage.

6. Use of the brominated polyetherpolyols according to any one of Claims 1 to 4, by themselves or mixed with unhalogenated conventional polyetherpolyols, for the manufacture of rigid polyurethane foams.

**Claims for the Contracting States: AT ES GR**

1. Process for the manufacture of brominated polyetherpolyols of general formula

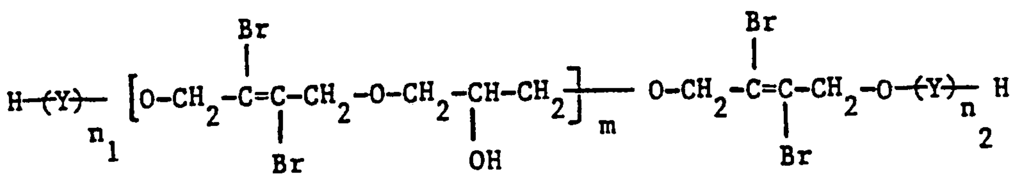

(I)

in which:
Y denotes oxyalkylene radicals derived from ethylene oxide, propylene oxide and or butylene oxide,
m denotes a number such that $1 \leqslant m \leqslant 2$, and,
$n_1$ and $n_2$ denote numbers such that $1 \leqslant (n_1 + n_2) \leqslant 5$, characterized in that, in a first stage, (m + 1) moles of 2-butyne-1,4-diol are condensed with m moles of epichlorohydrin in the presence of m moles of a

strong base, in a second stage, $(n_1 + n_2)$ moles of alkene oxide(s) are added in a basic medium to the unsaturated polyetherpolyol from the preceding stge, and, in a third stage, $(m + 1)$ moles of bromine are added to the unsaturated polyetherpolyol from the preceding stage.

2. Process according to Claim 1, characterized in that

m denotes a number such that $1 \leqslant m \leqslant 2$, and,

$n_1$ and $n_2$ denote numbers such that $1 \leqslant (n_1 + n_2) \leqslant 3$.

3. Process according to either of Claims 1 and 2, characterized in that the alkene oxide is propylene oxide.

4. Process according to Claim 3, characterized in that

m denotes a number equal to 1, and

$n_1$ and $n_2$ denote numbers such that $(n_1 + n_2)$ is equal to 1.

5. Use of the brominated polyetherpolyols obtained according to any one of Claims 1 to 4, by themselves or mixed with unhalogenated conventional polyetherpolyols for the manufacture of rigid polyurethane foams.